# EUROPÄISCHE PATENTSCHRIFT

(11) **EP 0 724 996 B1**
(45) Veröffentlichungstag und Bekanntmachung des Hinweises auf die Patenterteilung: **22.07.1998**
(21) Anmeldenummer: 95119616.1
(22) Anmeldetag: 13.12.1995
(51) Int. Cl.: B60T 17/02, F02M 17/52

(54) **Brennkraftmaschine mit einer Saugstrahlpumpe zur Unterdruckversorgung insbesondere eines Bremskraftverstärkers**
Combustion engine with a jet pump for vacuum supply especially of a brake booster
Engin à combustion avec une pompe à jet pour distribution de vide notamment d'un amplificateur de force de freinage

(30) Priorität: 03.02.1995 DE 19503568
(43) Veröffentlichungstag der Anmeldung: 07.08.1996
(73) Patentinhaber: Bayerische Motoren Werke Aktiengesellschaft, 80788 München (DE)
(72) Erfinder: Espitte, Achim, D-85307 Paunzhausen (DE)

(56) Entgegenhaltungen:
- DE-A- 2 717 685
- DE-A- 4 202 393
- FR-A- 2 533 186

## Beschreibung

Die Erfindung betrifft eine quantitätsgesteuerte Brennkraftmaschine mit einer in einem Bypass zum Quantitätssteuerorgan angeordneten Saugstrahlpumpe zur Unterdruckversorgung eines Servo-Motors, insbesondere eines Bremskraftverstärkers.

Solche Brennkraftmaschinen sind aus DE-AS 27 17 685 bekannt. Diese bekannte Anordnung zur Bereitstellung eines ausreichenden Unterdruckes für einen Bremskraftverstärker arbeitete bei früheren Brennkraftmaschinen durchaus befriedigend. Neuere Brennkraftmaschinen hingegen sind hinsichtlich der Reibleistungsverluste so stark optimiert, daß insbesondere bei betriebswarmer Brennkraftmaschine nurmehr äußerst geringe Luftmengen benötigt werden, um die Brennkraftmaschine im Leerlauf zu betreiben. Diese äußerst geringe Leerlaufluftmenge ist dabei niedriger als diejenige Luftmenge, die über den die Saugstrahlpumpe enthaltenden Bypass geführt werden muß, um durch den Saugstrahleffekt eine ausreichend hohe Unterdruckverstärkung zur ausreichenden Versorgung des Servomotors/Bremskraftverstärkers mit Unterdruck zu erzielen.

Lösungsmaßnahmen für diese Problematik aufzuzeigen, ist Aufgabe der vorliegenden Erfindung.
Die Lösung ist gekennzeichnet durch ein im Bypass stromauf der Saugstrahlpumpe vorgesehenes Sperr- und/oder Drosselventil.

Näher erläutert wird die Erfindung anhand eines bevorzugten Ausführungsbeispieles, das ein der beigefügten einzigen Prinzipskizze dargestellt ist.
Mit der Bezugsziffer 1 ist die nicht näher dargestellte Sauganlage einer ebenfalls nicht gezeigten quantitätsgesteuerten Brennkraftmaschine bezeichnet. In diese Sauganlage 1 mündet wie üblich eine von einem Luftmassenmesser 2 kommende Saugleitung 3, in der wie üblich eine Drosselklappe 4 zur Quantitätssteuerung der von der Brennkraftmaschine angesaugten Luftmenge und somit zur Einstellung des Brennkraftmaschinen-Betriebspunktes vorgesehen ist. Dieser Saugleitung 3 ist ein erster Bypasszweig 5 parallelgeschaltet, in dem sich ebenfalls ein Quantitätssteuerorgan 6 befindet, das als Leerlaufsteller fungiert. Mit diesem Quantitätssteuerorgan 6 wird somit die für den Leerlaufbetrieb der Brennkraftmaschine benötigte Luftmenge eingestellt, während mit dem als Drosselklappe 4 ausgebildeten und in der Saugleitung 3 angeordneten Quantitätssteuerorgan die im Teillastbetrieb der Brennkraftmaschine benötigte Luftmenge eingestellt wird.

In der Sauganlage 1 mündet eine weitere Leitung, die ebenfalls vom Luftmassenmesser 2 abzweigt und somit einen weiteren Bypass 7 zum Quantitätssteuerorgan 6 sowie zur Drosselklappe 4 darstellt. In diesem Bypass 7 ist eine Saugstrahlpumpe 8 angeordnet, von deren engstem Querschnitt aus wie bekannt eine Unterdruckleitung 9 zu einem nicht gezeigten Bremskraftverstärker (allgemein: Servo-Motor) führt. Stromauf der Saugstrahlpumpe 8, d. h. zwischen der Saugstrahlpumpe 8 sowie dem Luftmassenmesser 2 ist in diesem Bypass 7 weiterhin ein als Magnetventil ausgebildetes Sperrventil 10 angeordnet, mit Hilfe dessen die Verbindung zwischen der Eingangsseite der Saugstrahlpumpe 8 sowie der Ausgangsseite des Luftmassenmessers 2 unterbrochen werden kann.

Die Funktionsweise der beschriebenen Anordnung ist wie folgt:
Bei einem Kaltstart der Brennkraftmaschine ist das Sperrventil 10 geöffnet, ebenso relativ weit geöffnet ist das als Leerlaufsteller fungierende Quantitätssteuerorgan 6. Da aufgrund des Offenzustandes des Sperrventiles 10 der Bypass 7 durchströmt wird, entsteht in der Saugstrahlpumpe 8 am engsten Düsenquerschnitt ein deutlicher Druckabfall, so daß über die Unterdruckleitung 9 der Bremskraftverstärker mit ausreichend intensivem Unterdruck versorgt wird. Dabei wirkt der über den Bypass 7 in die Sauganlage 1 gelangende Luftstrom gleichzeitig als gewünschte sog. Kaltstartanhebung der Brennkraftmaschine in diesem Betriebszustand.

Mit zunehmender Erwärmung der Brennkraftmaschine reduziert sich wie bekannt und üblich der Leerlaufluftbedarf, so daß das Quantitätssteuerorgan 6 durch eine nicht gezeigte Stelleinheit aufgrund von Signalen einer ebenfalls nicht gezeigten elektronischen Steuereinheit in Richtung einer verstärkten Drosselung bewegt wird. Hierdurch erhöht sich wie üblich der Unterdruck in der Sauganlage 1.

Bei noch weiterer Abnahme des Leerlaufluftbedarfes müßte schließlich das Quantitätssteuerorgan 6 vollständig geschlossen werden. Dann ist jedoch keine sinnvolle Leerlaufregelung mehr möglich. Aus diesem Grunde wird kurz vor Erreichen des Schließzustandes des Quantitätssteuerorganes 6 das Sperrventil 10 im Bypass 7 geschlossen. Hierdurch gelangt kurzfristig eine entsprechend verringerte Luftmenge in die Sauganlage 1 der Brennkraftmaschine, wonach das Quantitässteuerorgan 6, d. h. der Leerlaufsteller, wieder um einen entsprechenden Betrag geöffnet werden kann. Nun ist wieder eine gewünschte Leerlaufregelung durch geeignete Ansteuerung des Quantitätssteuerorganes 6 möglich. Dabei ist der in der Sauganlage 1 herrschende Unterdruck ausreichend groß, um den Bremskraftverstärker mit dem jeweils benötigten Unterdruck beaufschlagen zu können. Die Unterdruckversorgung des Bremskraftverstärkers erfolgt hier ohne Nutzung des Saugstrahlpumpeneffektes weiterhin über die dann jedoch nur als Zuleitung dienende Saugstrahlpumpe 8 mit der sich daran anschließenden Unterdruckleitung 9.

Indem somit die Saugstrahlpumpe 8 zuschaltbar bzw. abschaltbar ist, kann in allen Betriebspunkten der Brennkraftmaschine eine optimale Leerlaufregelung erfolgen, wobei weiterhin in sämtlichen Betriebspunkten der Brennkraftmaschine ein ausreichend hohes Unterdruckniveau für den Bremskraftverstärker bereitgestellt wird. Bei hohem Luftbedarf der Brennkraftmaschine, d. h. nicht nur im Leerlauf bei Kaltstart, sondern auch in Dauer-Vollastbetriebspunkten, kann das Sperrventil 10 geöffnet sein, um den geforderten Unterdruck mit Hilfe des Saugstrahlpumpeneffektes bereitzustellen, da bei diesen Betriebspunkten innerhalb der Sauganlage 1 kein ausreichend hohes Unterdruckniveau herrscht. Bei niedrigem Luftbedarf der Brennkraftmaschine ist es weiterhin möglich, die benötigte Luftmenge allein mit Hilfe des Quantitätssteuerorganes 6 einzustellen, wenn in diesen Betriebspunkten das Sperrventil 10 geschlossen ist. Da in diesen Betriebspunkten in der Sauganlage 1 ein ausreichend hoher Unterdruck herrscht, kann dann der Bremskraftverstärker über die Unterdruckleitung 9 auch ohne Nutzung des Saugstrahlpumpeneffektes mit dem jeweils benötigten Unterdruckniveau beaufschlagt werden.

Die beschriebene Anordnung ist auch im Notbetrieb ausreichend funktionstüchtig. Sollte das Sperrventil im geschlossenen Zustand beispielsweise durch Einfrieren blockiert sein, so erfolgt die Unterdruckversorgung des Bremskraftverstärkers in sämtlichen Betriebspunkten der Brennkraftmaschine direkt über die Sauganlage 1, analog einem System ohne Saugstrahlpumpe. Zwar mag dann in manchen Fällen das Unterdruckniveau nicht ausreichend hoch sein, eine geringfügige Unterdruckversorgung des Bremskraftverstärkers ist jedoch auch dann noch gewährleistet. Sollte hingegen das Sperrventil 10 im geöffneten Zustand blockieren, so wird der Bypass 7 in sämtlichen Betriebszuständen durchströmt. Zwar kann dann nicht unter allen Umständen eine sichere Leerlaufregelung mit Hilfe des Quantitätssteuerorganes 6 realisiert werden, jedoch ist stets ein ausreichendes Unterdruckangebot für den Bremskraftverstärker vorhanden.

Die bisherige Erläuterung erfolgte für das in der Prinzipskizze dargestellte Ausführungsbeispiel, wonach das Sperrventil 10 als einfaches Auf-Zu-Ventil ausgebildet ist. In einer Abwandlung der Erfindung ist es jedoch auch möglich, in diesem Bypass 7 anstelle eines Sperrventiles 10 ein Drosselventil vorzusehen, welches die Funktion des Leerlaufstellers übernimmt. Der erste Bypasszweig 5 kann dann ersatzlos entfallen, da die Versorgung der Brennkraftmaschine mit dem benötigten Leerlaufluftstrom über den Bypass 7 erfolgt. Auch bei dieser abgewandelten Ausführungsform ist unter allen Betriebszuständen der Brennkraftmaschine eine optimale Leerlaufregelung mit Hilfe des Drosselventiles 10, das als Leerlaufsteller fungiert, möglich. Auch wird bei dieser abgewandelten Ausführungsform der Erfindung dem Bremskraftverstärker über die Unterdruckleitung 9 stets ein ausreichend hohes Unterdruckniveau angeboten, entweder im wesentlichen direkt in Form des in der Sauganlage 1 herrschenden Unterdruckes, oder über den Saugstrahlpumpeneffekt aufgrund einer Durchströmung der Saugstrahlpumpe 8. Auch bei dieser abgewandelten Ausführungsform stellt der Bypass 7 mit der Saugstrahlpumpe sowie dem stromauf der Saugstrahlpumpe 8 vorgesehenen Drosselventil einen Bypass zu einem Quantitätssteuerorgan der Brennkraftmaschine dar, und zwar handelt es sich um einen Bypass zur Saugleitung 3 mit der Drosselklappe 4. Dabei kann es im Rahmen dieser abgewandelten Ausführungsform selbstverständlich erforderlich sein, die jeweiligen Leitungsquerschnitte anzupassen, jedoch sind ohnehin eine Vielzahl von Änderungen vom beschriebenen Ausführungsbeispiel möglich, ohne den Inhalt des Patentanspruches zu verlassen.

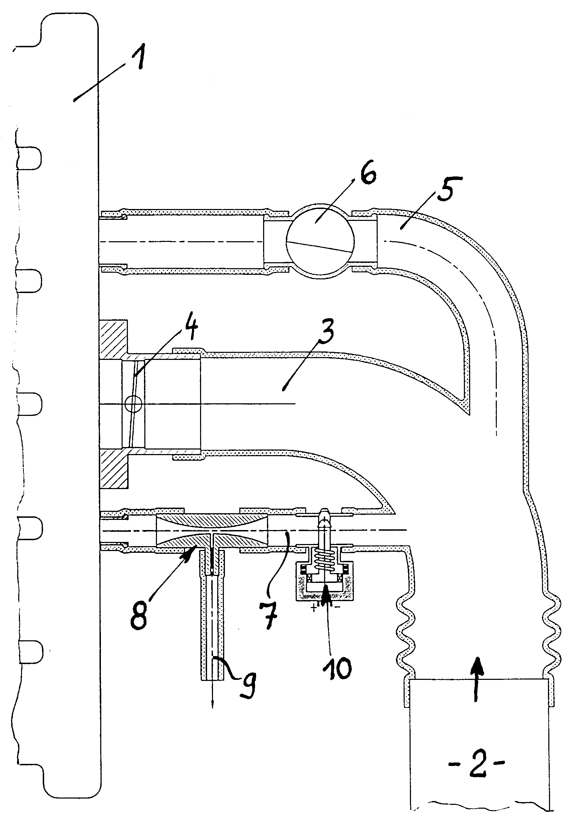

## Patentansprüche

1. Quantitätsgesteuerte Brennkraftmaschine mit einer in einem Bypass (7) zum Quantitätssteuerorgan (6) oder Drosselklappe (4) angeordneten Saugstrahlpumpe (8) zur Unterdruckversorgung eines Servo-Motors, insbesondere eines Bremskraftverstärkers,
gekennzeichnet durch ein im Bypss (7) stromauf der Saugstrahlpumpe (8) vorgesehenes Sperr- und/oder Drosselventil (10).

## Claims

1. A quantity-controlled internal combustion engine comprising a sucking jet pump (8) disposed in a bypass (7) to the quantity control means (6) or throttle valve (4) and for supplying negative pressure to a servomotor, especially a servo-brake, characterised by a shut-off and/or throttle valve (10) provided in the bypass (7) upstream of the sucking jet pump (8).

## Revendications

1. Moteur à combustion interne à commande quantitative comprenant une pompe à jet (8) montée dans une dérivation (7) par rapport à l'organe de commande quantitatif (6) ou au volet d'étranglement (4), pour assurer l'alimentation en dépression d'un servomoteur notamment d'un amplificateur de force de freinage,
caractérisé par
une vanne ou soupape d'arrêt et/ou d'étranglement (10) équipant une dérivation (7) en amont de la pompe à jet (8).
